# EUROPÄISCHE PATENTSCHRIFT

(11) **EP 3 879 138 B1**
(45) Veröffentlichungstag und Bekanntmachung des Hinweises auf die Patenterteilung: **29.11.2023**
(21) Anmeldenummer: 21156052.9
(22) Anmeldetag: 09.02.2021
(51) Int. Cl.: F16H 63/34, F16H 63/38

(54) **PARKSPERRENSYSTEM**
PARK LOCKING SYSTEM
SYSTÈME DE VERROUILLAGE DU PARKING

(30) Priorität: 10.03.2020 DE 102020203033
(43) Veröffentlichungstag der Anmeldung: 15.09.2021
(73) Patentinhaber: Robert Bosch GmbH, 70442 Stuttgart (DE)
(72) Erfinder: Weinzierl, Johannes, 83098 Brannenburg (DE); Loesch, Stefan, 86647 Buttenwiesen (DE)

(56) Entgegenhaltungen:
- DE-A1- 10 316 949
- DE-A1-102007 000 637
- JP-A- 2018 059 562

## Beschreibung

### Technisches Gebiet

Die Erfindung bezieht sich auf ein Parksperrensystem mit einem elektromechanischen Aktor, einem Klinkenrad und einer Sperrklinke sowie einem Kniehebel an einem Fahrzeug, wobei der elektromechanische Aktor eine Magnetspule und einen durch diese betätigten Anker aufweist. Darüber hinaus bezieht sich die Erfindung auf die Verwendung des Parksperrensystems in einem elektrisch angetriebenen Fahrzeug.

### Stand der Technik

DE 10 2007 000 637 A1 hat eine Vorrichtung zum Betätigen einer Rasteinrichtung zum Gegenstand. Ein axial verschiebbares Kolbenelement ist in einer vordefinierten Kolbenstellung haltbar. Die Rasteinrichtung wird dabei über einen elektromagnetischen Aktor durch Aufheben einer Wirkverbindung zwischen den Rastelementen und dem Kolbenelement in einen deaktivierten Zustand überführt. Im unbestromten Zustand des Aktors wird ein Betätigungselement in einen einen Eingriff der Rastelemente mit dem Kolbenelement zulassenden Betriebszustand versetzt. Hierzu ist dem Betätigungselement ein Permanentmagnet zugeordnet. Alternativ zum Permanentmagneten ist erwähnt, dass das Betätigungselement bei stromlos geschaltetem elektromagnetischen Aktor durch eine Federeinrichtung aus dem Wirkbereich der Rastelemente gerückt wird. Es ist ein System offenbart, welches einen Verriegelungszustand einer Rasteinrichtung stromlos aufrechterhält und durch Aufbringung eines elektrischen Stroms den Verriegelungszustand deaktiviert.

DE 10 2017 121 007 A1 betrifft eine Parksperre für einen Antriebsstrang eines Kraftfahrzeugs. Durch beispielsweise eine axiale Bewegung eines Bolzens kann ein Aktor zur Betätigung eines Sperrelements beispielsweise einen Hubmagneten aufweisen. Auch kann ein in eine Richtung wirksamer Hubmagnet vorgesehen sein, der in bevorzugter Weise in Schubrichtung entgegen der Wirkung eines Federelements arbeitet. Das Sperrelement der Parksperre kann im Sperrzustand und im offenen Zustand fixiert ausgebildet sein. Hierzu kann eine Fixierung in zwei Richtungen begrenzt gemäß dem Kugelschreiberprinzip ausgebildet sein. Die Mechanik der Parksperre kann auf ein einfaches Sperrelement wie beispielsweise einen Bolzen reduziert sein, welcher in einem Parksperrenrad mit entsprechenden Ausnehmungen beispielsweise Zahnlücken, Löchern oder dergleichen formschlüssig eingreift. Insbesondere können als Aktoren ein in eine Richtung wirkender Hubmagnet in Kombination mit einer Rückstellfeder und in bevorzugter Weise ein in beide Richtungen wirksamer Hubmagnet ohne Rückstellfeder oder wahlweise ein einfach wirkender Hubmagnet in Kombination mit einem Kugelschreiber-Mechanismus vorgesehen sein.

JP 2018 059 562 A, auf welchem die zweiteilige Anspruchsfassung basiert, offenbart eine Rastmechanik für eine Parksperre, bei welcher eine auf einer Welle angeordnete Sperrklinke einen Klinkenzahn aufweist, der in Ausnehmungen eines Parksperrenrads eingreift. Das dem Klinkenzahn gegenüberliegende andere Ende der Sperrklinke wird über eine Mimik betätigt, die eine federbeaufschlagte Druckplatte aufweist, die mit einer Rastverzahnung zusammenwirkt.

Konventionelle Parksperrenbetätigungen benötigen einen elektrischen Steller-Antrieb, der teuer ist, da dieser in der Regel einen Gleichstrommotor, eine Spindelmechanik sowie eine Drehrichtungsumkehr durch Stromrichtungswechsel, eine Positionsüberwachung, eine Endlageerkennung sowie eine dazugehörige Software umfasst. Des Weiteren benötigen derartige Parksperrenbetätigungen relativ viel Bauraum, sie bedürfen einer Ansteuerung und Überwachung über ein Steuergerät, ferner einer 12-Volt-Spannungsversorgung sowie Kommunikationsaufwand.

### Darstellung der Erfindung

Erfindungsgemäß wird zur Lösung des obigen Problems ein Parksperrensystem mit einem elektromechanischen Aktor nach Anspruch 1 vorgeschlagen.

Vorteilhafte Ausgestaltungen der Erfindung sind in den abhängigen Ansprüchen dargelegt.

Durch die erfindungsgemäß vorgeschlagene Lösung kann in vorteilhafter Weise der Aufwand für einen elektromechanischen Aktor begrenzt werden, da ein sicheres Ein- und Ausfahren durch einfache Einzelbestromung in derselben Stromrichtung realisiert wird, sodass auf elektrische Steller-Antriebe, Spindelmechanik und Positionsüberwachung und dergleichen verzichtet werden kann.

In Weiterbildung der erfindungsgemäß vorgeschlagenen Lösung sind die Rastmechanik und die Verstellmechanik koaxial in Bezug auf ihre Symmetrieachse angeordnet. Dadurch wird der für die Realisierung des vorgeschlagenen elektromechanischen Aktors erforderliche Bauraum drastisch reduziert.

In vorteilhafter Weiterbildung der erfindungsgemäß vorgeschlagenen Lösung weist die Rastmechanik eine Anzahl von Rastgeometrien auf, die jeweils einen Rastausschnitt umfassen, der von Rastflanken begrenzt ist.

In vorteilhafter Weiterbildung der erfindungsgemäß vorgeschlagenen Lösung umfasst die Verstellmechanik eine Anzahl von Verstellelementen, die ihrerseits mit Flanken versehen sind, die den Rastgeometrien gegenüberliegen und deren Geometrie insbesondere der Geometrie von deren Flanken entsprechen.

Gemäß der vorliegenden Erfindung sind die Verstellmechanik an einer ersten Druckplatte und die Rastmechanik an einer zweiten Druckplatte aufgenommen, die jeweils federbeaufschlagt sind. Durch die Federbeaufschlagung der die Rastmechanik beziehungsweise die Verstellmechanik jeweils aufnehmenden Druckplatten sind einfache Rückstellbewegungen realisierbar.

In Weiterbildung der erfindungsgemäß vorgeschlagenen Lösung kann in vorteilhafter Weise bei jeder Bestromung der Magnetspule die bevorzugt sechs Verstellelemente umfassende Verstellgeometrie eine translatorische Bewegung ausführen, bei welcher die eine Anzahl von Rastgeometrien aufweisende Rastmechanik beispielsweise um 60° um die Symmetrieachse verdreht wird. Dadurch kann in vorteilhafter Weise eine Verriegelung des Bolzens des elektromechanischen Aktors bei einer jeden Bestromung der Magnetspule erreicht werden, die so lange aufrechterhalten bleibt, bis die Magnetspule erneut bestromt wird.

Gemäß der vorliegenden Erfindung ist das Parksperrensystem derart ausgebildet, dass die Verstellmechanik und die Rastmechanik beweglich zueinander in einer Hülse aufgenommen sind, die beispielsweise drei um 120° zueinander versetzte Rastnasen umfassen kann. Die Verstellmechanik kann beispielsweise sechs Zähne aufweisen, während die Rastmechanik mehrere, insbesondere drei, Doppelzähne aufweisen kann. Die erfindungsgemäße Anordnung aus Verstellmechanik und Rastmechanik, die in Bezug aufeinander relativ bewegbar sind, befindet sich in einer Hülse, an deren Innenumfang die Rastnasen aufgenommen sind. Während die Verstellmechanik eine reine Linearbewegung ausführt, die von den Rastnasen geführt wird, führt die Rastmechanik eine kombinierte rotarische / lineare Bewegung, d. h. translatorische Bewegung, aus.

Gemäß der vorliegenden Erfindung zieht eine den Anker mit daran befestigter erster Druckplatte samt Verstellmechanik beaufschlagende Zugfeder die Verstellmechanik im stromlosen Zustand der Magnetspule in eine Ruheposition, ohne erneute Bestromung der Magnetspule, zurück.

Gemäß der vorliegenden Erfindung ist der Bolzen des elektromechanischen Aktors derart angeordnet, dass dieser mit einem Kniehebel zusammenwirkt, der eine dem Klinkenrad zugeordnete Sperrklinke um eine Klinkenachse bewegt.

In vorteilhafter Weiterbildung der erfindungsgemäß vorgeschlagenen Lösung ist der elektromechanische Aktor derart ausgeführt, dass dieser in Bezug auf seine Verstellmechanik und seine Rastmechanik und die Druckplatten konzentrisch aufgebaut ist.

Schließlich bezieht sich die Erfindung auf die Verwendung des beanspruchten Parksperrensystems in einem elektrisch angetriebenen Fahrzeug.

### Vorteile der Erfindung

Durch die erfindungsgemäß vorgeschlagene Lösung kann eine Parksperre mittels eines Magnetaktors und einer Rastmechanik dargestellt werden, die bei einer jeden Bestromung einen Betätigungsbolzen abwechselnd ausbeziehungsweise einfährt und nach einer jeden Betätigung des Aktors durch Federkraft selbsttätig verriegelt ist und bleibt. Durch die erfindungsgemäß vorgeschlagene Lösung kann in vorteilhafter Weise erreicht werden, dass elektrische Steller-Antriebe, so zum Beispiel eine Spindelmechanik mit Positionsüberwachung, Software-Aufwände und funktionale Sicherheitsaspekte nicht notwendig sind. Es ist ein sicheres Ein- und Ausfahren des Bolzens durch einfache Einzelbestromungen einer Magnetspule in derselben Stromrichtung möglich. Im Gegensatz zu konventionellen elektrischen Steller-Antrieben kann eine relativ kostengünstige Magnetspule eingesetzt werden, die nur im Impulsbetrieb im Millisekundenbereich betrieben wird und daher hoch überbelastbar und kompakt bauend ausgestaltet sein kann. Eine zusätzliche Positionsüberwachung kann entfallen, eine jede Betätigung der Magnetspule, d. h. deren Bestromung, führt zu einem Erreichen und einem dauerhaften Aufrechterhalten einer sicheren Rastposition. Ein korrektes Auslösen des in den Ansprüchen vorgeschlagenen elektromechanischen Aktors kann sehr leicht über den Spulenstrom detektiert werden, indem der Stromverlauf über die Zeit aufgenommen wird.

Durch die erfindungsgemäß vorgeschlagene Lösung kann eine reduzierte Teileanzahl, eine reduzierte Teilekomplexität, eine geringe Baugröße und eine sehr hohe Zuverlässigkeit über Lebensdauer durch einfach gestaltete mechanische Bauteile erreicht werden.

Des Weiteren können bei der erfindungsgemäß vorgeschlagenen Lösung zusätzliche Aufwände hinsichtlich einer Stromrichtungsumkehr für Ver- und Entriegelung der Parksperre entfallen.

Hinsichtlich funktionaler Vorteile der erfindungsgemäß vorgeschlagenen Lösung sind eine geringe Betätigungskraft für den in den Ansprüchen vorgeschlagenen elektromechanischen Aktor zu nennen, der jedoch sehr hohe Haltekräfte ermöglicht, da der Bolzen verriegelt wird. Es ist ein wesentlich schnellerer Betätigungsvorgang im Vergleich mit einem elektrisch angetriebenen Spindelsteller erreichbar. Des Weiteren zeichnet sich die erfindungsgemäß vorgeschlagene Lösung durch ein reduziertes Gewicht aus; ferner lässt sich eine einfache Notfallentriegelung erreichen, bei Ausfall, bei Abschleppsituationen oder bei einem Werkstattaufenthalt, da mittels eines einfachen Werkzeugs der Bolzen von außen mechanisch über einen Steckvorgang entriegelt werden kann.

Hinsichtlich einer Sicherheitsbetrachtung des in den Ansprüchen vorgeschlagenen Aktors kann ein Defekt des Aktors sehr leicht festgestellt werden. Die Magnetspule hat entweder einen Wicklungsschluss (Widerstand unter Sollwert) oder sie ist durchgebrannt (Widerstand unendlich). Beide Fehlerfälle sind vom Steuergerät leicht erkennbar und können zu einer Warnmeldung führen, so zum Beispiel zu einer Fahrerwarnung im Display "Parkbremse manuell einlegen". In diesem Fall kann per Bowden-Zug auf die Hinterachse oder durch eine elektromechanische Feststellbremse das Fahrzeug gegen Wegrollen gesichert werden. Im Falle eines klemmenden Bolzens, bei dessen Auftreten der Bolzen trotz Bestromung nicht ein- oder ausgefahren werden kann, ist eine einfache Notfallentriegelung möglich.

Bei der erfindungsgemäß vorgeschlagenen Lösung ist prinzipbedingt keine stufenlose Verstellung des Parksperrenblockierelements, d. h. des Bolzens, durch einen Steller erforderlich, sondern lediglich das Erreichen eines Endanschlags, bei dem der Bolzen entweder vollständig aus- oder vollständig eingefahren ist. Die häufig gewählte Ausführung mittels eines Spindeltriebs ergibt sich aus der geforderten Linearbewegung der Sperrklinke in Kombination mit dem Aufbringen der nötigen Haltekräfte, um ein ungewolltes Entriegeln der Parksperre durch äußere Kräfte unmöglich zu machen. Durch die erfindungsgemäß vorgeschlagene Lösung lässt sich insbesondere im Vergleich mit einem Spindelaktuator eine erhebliche Kosteneinsparung realisieren. So erfolgt der Ersatz eines Stellermotors mit einer aktiven Elektronik durch eine einfach ausgeführte Magnetspule. Des Weiteren ist in vorteilhafter Weise ein Kurzzeitbetrieb der Magnetspule mit Überlast möglich, wobei ein Verzicht auf die bei einem Spindelaktuator erforderliche Stromwendung erfolgen kann, zum Beispiel in Gestalt des Entfalls einer H-Brücke im elektronischen Steuergerät.

Das Einlegen beziehungsweise Lösen der Parksperre ist jeweils nur ein kurzzeitiger Betriebsfall.

Durch die erfindungsgemäß vorgeschlagene Lösung betreffend dem elektromechanischen Aktor ergibt sich ein Baugrößenvorteil der erfindungsgemäß vorgeschlagenen Lösung gegenüber einem Spindelaktuator, der im Regelfall außen an der Antriebseinheit zu montieren ist und daher die Baugröße der Antriebseinheit mitbestimmt. Dadurch wird wenig Bauraum beansprucht, was für kompakte E-Antriebseinheiten, zum Beispiel in Fahrzeugen mit beschränktem Raumangebot, einen erheblichen Nutzeffekt darstellt.

### Kurze Beschreibung der Zeichnungen

Anhand der Zeichnungen wird die Erfindung nachstehend eingehender beschrieben, wobei der in den Fig. 1 bis 4 dargestellte elektromechanische Aktor die Funktionsweise des in den Ansprüchen definierten Aktors zeigt, jedoch dieser nicht Bestandteil der beanspruchten Erfindung ist.

Es zeigen:
- Figur 1: einen elektromechanischen Aktor in seiner Ruheposition,
- Figur 2: den besagten elektromechanischen Aktor in einer Vorspannposition,
- Figur 3: den besagten elektromechanischen Aktor in seiner Einrastposition,
- Figur 4: den besagten elektromechanischen Aktor in seiner Entriegelungsposition,
- Figuren 5.1 und 5.2: ein erfindungsgemäßes Parksperrensystem mit den über den elektromechanischen Aktor betätigten Bolzen in ein- und ausgefahrener Lage in Zusammenwirkung mit einem Kniehebel, einer Sperrklinke und einem Klinkenrad,
- Figur 6: eine Hülse mit Rastnase am Innenumfang mit Verstellmechanik und Rastmechanik, wobei eine solche Ausgestaltung des Aktors Bestandteil der beanspruchten Erfindung ist, und
- Figur 7: einen Schnittverlauf (IV-IV) durch die in Figur 6 dargestellte Hülse.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den mit dem beanspruchten Parksperrensystem in Beziehung stehenden elektromechanischen Aktor nur schematisch dar.

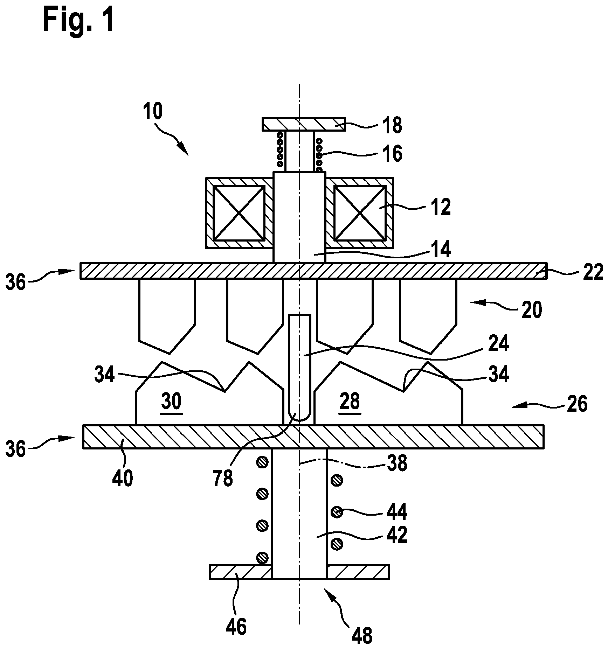

Der Darstellung gemäß Figur 1 ist der besagte elektromechanische Aktor 10 in seiner Ruheposition 48 zu entnehmen.

Ein elektromechanischer Aktor 10 umfasst eine Magnetspule 12, die einen in vertikale Richtung bewegbaren Anker 14 umschließt. Der Anker 14 ist von einer Zugfeder 16 beaufschlagt, die sich ihrerseits an einer Aufhängung 18 abstützt. Der Anker 14 ist mit einer ersten Druckplatte 22 verbunden, die in der Darstellung gemäß Figur 1 in einer abgewickelten Darstellung 36 dargestellt ist. An der ersten Druckplatte 22 befindet sich eine Verstellmechanik 20, die eine Anzahl von Verstellelementen 21, die in der in Figur 1 dargestellten Ausführungsvariante zahnförmig ausgebildet sind, umfasst.

Des Weiteren umfasst der elektromechanische Aktor 10 gemäß der Darstellung in Figur 1 eine Rastmechanik 26, die eine Anzahl von Rastgeometrien 28, 30, 32 umfasst, die durch Zwischenräume 76 voneinander getrennt sind. Die Rastmechanik 26 ist an einer zweiten Druckplatte 40 aufgenommen, die in der Darstellung gemäß Figur 1 ebenfalls in abgewickelter Darstellung 36 wiedergegeben ist. Die einzelnen Rastgeometrien 28, 30, 32 umfassen Rastausschnitte 34, die jeweils durch Flanken 94 begrenzt sind. Der elektromechanische Aktor 10 ist symmetrisch um seine Symmetrieachse 38 ausgeführt und umfasst einen im Wesentlichen konzentrischen Aufbau. Die zweite Druckplatte 40, an deren Oberseite sich die Rastmechanik 26 mit den Rastgeometrien 28, 30, 32 befindet, ist von einer Druckfeder 44 beaufschlagt, die einen Bolzen 42 umschließt, der durch die zweite Druckplatte 40 beaufschlagt ist.

Die Druckfeder 44 stützt sich an einem Gegenlager 46 ab.

In der Darstellung gemäß Figur 1 ist der elektromechanische Aktor 10 in einer Ruheposition 48 wiedergegeben, in der die Magnetspule 12 nicht bestromt ist und die Verstellmechanik 20 sowie die dieser gegenüberliegende Rastmechanik 26 jeweils aufgenommen an den Druckplatten 22, 40 nicht bestromt und auseinandergefahren sind.

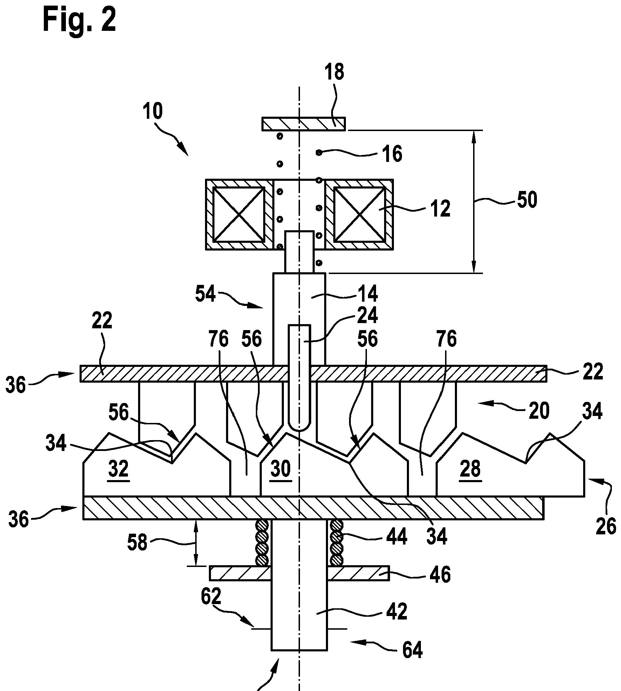

Figur 2 zeigt den elektromechanischen Aktor 10 in einer Vorspannposition 64.

Aus der Darstellung gemäß Figur 2 geht hervor, dass im bestromten Zustand 52 der Magnetspule 12 der Anker 14 aus der Magnetspule 12 ausfährt und die Zugfeder 16 ihren maximalen Zugweg 50 durchfährt. Eine im elektromechanischen Aktor 10 positionsfest angeordnete Rastnase 24 wird bei der vertikalen Abwärtsbewegung des Ankers 14 von diesem teilweise umschlossen, vgl. ausgefahrene Position 54 des Ankers 14. Figur 2 zeigt, dass in der Vorspannposition 64 des elektromechanischen Aktors 10 die Verstellmechanik 20 an die Rastmechanik 26 angestellt ist. Diese wird wiederum von der Druckfeder 44 abgestützt, die in der Darstellung gemäß Figur 2, die der Vorspannposition 64 entspricht, eine maximale Kompression 58 einnimmt. Dadurch erfolgt eine maximale Ausfahrbewegung eines Bolzens 42, vgl. Position 60 in Figur 2. Die maximal ausgefahrene Position 60 des Bolzens 42 geht über eine Betätigungsposition 62, an der es zu einer Aktivierung des Parksperrensystems kommt, hinaus.

Figur 2 zeigt, dass die Flanken der Verstellmechanik 20 während der translatorischen Bewegung 112 über Flanken der Rastmechanik 26 gleiten und so eine Weiterbewegung der Rastmechanik 26 bewirken. Diese Weiterbewegung wird dadurch begrenzt, dass beide Mechaniken, d. h. die Verstellmechanik 20 und die Rastmechanik 26 einen Formschluss 56 einnehmen. In dieser in Figur 2 dargestellten Endlage befindet sich die Rastmechanik 26 in einer Position, bei der die positionsfeste Rastnase 24 nach Ende der Bestromung der Magnetspule 12 in die nächste Flanke der Rastmechanik 26 einrasten kann.

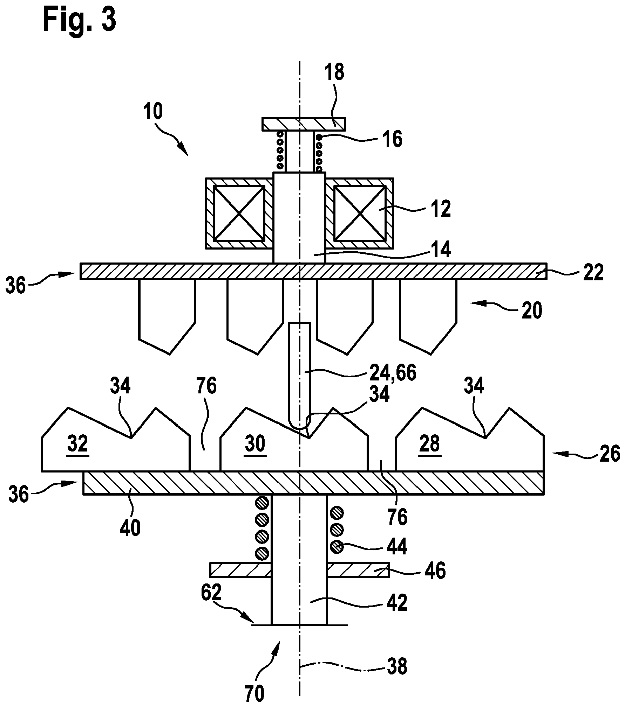

Figur 3 zeigt eine Einrastposition 70 des besagten elektromechanischen Aktors 10.

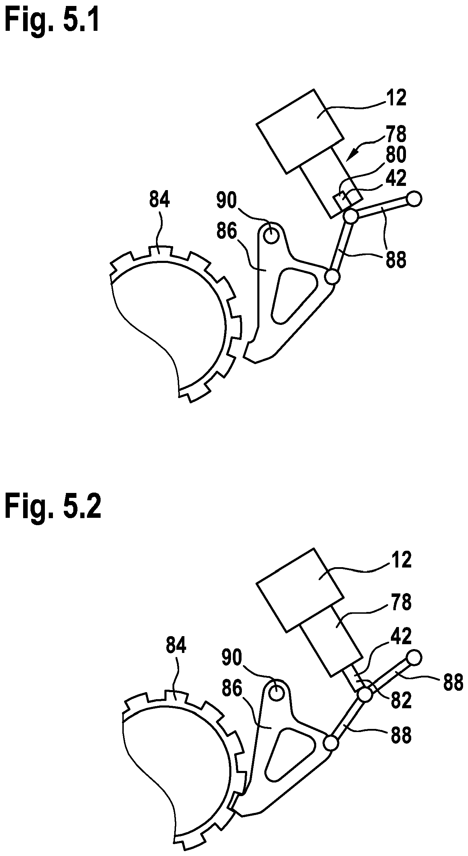

Nach Ende der Bestromung der Magnetspule 12 fällt der Anker 14 ab und wird von der Zugfeder 16, vgl. Darstellung gemäß Figur 3, in seine in Figur 1 dargestellte Ruhelage zurückgezogen. Die maximal vorgespannte Druckfeder 44, die sich am Gegenlager 46 abstützt, schiebt die zweite Druckplatte 40, an der die Rastmechanik 26 aufgenommen ist, etwas nach oben, bis ihre Rückwärtsbewegung von der Rastgeometrie, in diesem Falle die Rastgeometrie 30, gestoppt wird, die in dem Rastausschnitt 34 der entsprechenden Rastgeometrie 30 einrastet, vgl. Blockierposition 66. Bei dieser Rückwärtsbewegung fährt der Bolzen 42 eine kurze Bewegung zurück und nimmt seine in Figur 3 in der Einrastposition 70 dargestellte Betätigungsposition 62 zur Betätigung der Parksperre ein. In dieser Stellung drückt der Bolzen 42 die in Figur 5 näher dargestellte Mechanik der Parksperre in Gestalt einer Sperrklinke 86 in ein Klinkenrad 84 hinein, sodass diese eine Verriegelungsposition einnimmt, in der eine Getriebewelle blockiert ist.

In Bezug auf die Darstellung gemäß Figur 3 sei ergänzt, dass die erste Druckplatte 22 ebenso wie die zweite Druckplatte 40 in abgewickelter Darstellung 36 dargestellt sind. Die Verstellmechanik 20 und die Rastmechanik 26 sind jeweils auseinandergefahren, die positionsfeste Rastnase 24 ist in ihrer Blockierposition 66 in den Rastausschnitt 34 der zweiten Rastgeometrie 30 der Rastmechanik 26 eingefahren.

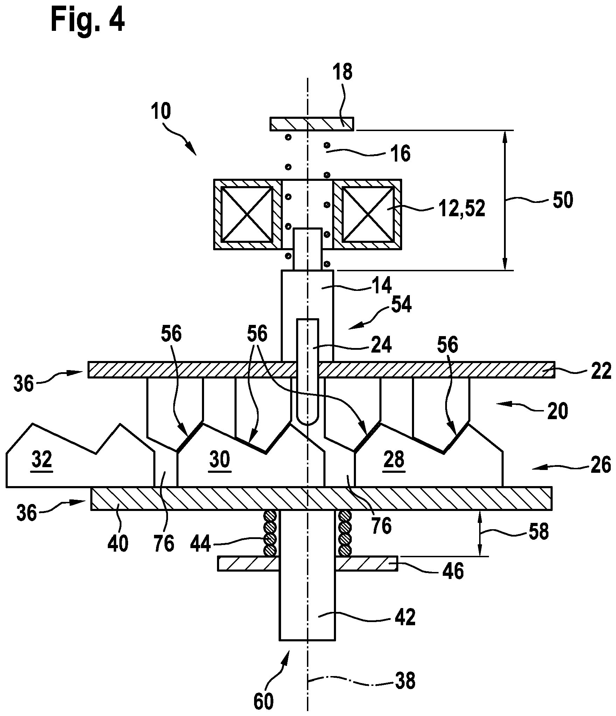

Eine Entriegelungsposition 74 des Bolzens 42 des erfindungsgemäß vorgeschlagenen elektromechanischen Aktors 10 ist in Figur 4 dargestellt.

Bei erneuter Bestromung der Magnetspule 12, d. h. in deren bestromtem Zustand 52, fährt der Anker 14 erneut aus, sodass die Zugfeder 16 ihren Maximalzugweg 50 in Bezug auf die Aufhängung 18 durchläuft. Dadurch wird die Verstellmechanik 20 gegen die Rastmechanik 26 gedrückt, die entgegen der Wirkung der Druckfeder 44 ausfährt, die ihre maximale Kompression 58 erfährt, wie in Figur 4 dargestellt. Dadurch löst sich die positionsfeste Rastnase 24 aus der betreffenden Rastgeometrie 30. Analog zur Darstellung gemäß Figur 2 erfolgt eine Begrenzung der Weiterbewegung der Rastmechanik 26 durch den Formschluss 56 zwischen der Verstellmechanik 20 einerseits und der Rastmechanik 26 andererseits. In dieser in Figur 4 dargestellten Position wird die Rastmechanik 26 so positioniert, dass die positionsfeste Rastnase 24 nach Entstromung der Magnetspule 12 in den nächsten Zwischenraum 76 zwischen zwei Rastgeometrien, in diesem Falle zwischen die erste Rastgeometrie 28 und die zweite Rastgeometrie 30, gleitet.

Im stromlosen Zustand zieht sich der Anker 14 aufgrund der Wirkung der Zugfeder 16 erneut zurück. Die Rastmechanik 26 wird durch die Druckfeder 44 zurückgedrückt und die positionsfeste Rastnase 24 gleitet in den leeren Raum, d. h. den Zwischenraum 76 zwischen den einzelnen Rastgeometrien 28, 30. Damit nimmt der erfindungsgemäß vorgeschlagene elektromechanische Aktor 10 seine Ausgangsposition, d. h. seine in Figur 1 dargestellte Ruheposition 48, erneut ein. In diesem Falle ist der Bolzen 42 eingefahren und gibt die Mechanik der Parksperre frei. Insbesondere kann ohne erneute Bestromung der Magnetspule 12 der Bolzen 42 seine Position nicht ändern.

Die Figuren 5.1 und 5.2 zeigen in schematischer Weise den Bolzen 42 im eingefahrenen Zustand 80 sowie im ausgefahrenen Zustand 82 eines erfindungsgemäßen Parksperrensystems.

Die in den Figuren 5.1 und 5.2 schematisch angedeutete Magnetspule 12 wirkt über eine Bolzenmechanik 78 auf den Bolzen 42, dessen Ein- und Ausfahrposition im Zusammenhang mit den Figuren 1 bis 4 erläutert wurde. Im eingefahrenen Zustand 80 des Bolzens 42 ist ein Kniehebel 88 nicht ausgelenkt, d. h. nimmt eine durchgestreckte Lage ein. Dadurch ist die um die Klinkenachse 90 bewegbare Sperrklinke 86 aus der Verzahnung des Klinkenrads 84 zurückgestellt. Bei entsprechender Aktivierung der Parksperre fährt der Bolzen 42 aus der Bolzenmechanik 78 aus und bewirkt eine Durchstreckung des Kniehebels 88. Dadurch wird die Sperrklinke 86 um ihre Klinkenachse 90 verdreht und rastet in eine Lücke zwischen zwei Zähnen am Außenumfang des Klinkenrads 84 ein.

Bei der erfindungsgemäß vorgeschlagenen Lösung können trotz relativ kleiner Bauform des elektromechanischen Aktors 10 hohe Verriegelungskräfte aufgebracht werden. Dies lässt sich insbesondere durch eine Mehrteiligkeit der Mechaniken, d. h. der Rastmechanik 26 und der Verstellmechanik 20, erreichen. Diese sind dazu im Gegensatz zur abgewickelten Darstellung 36, wie sie in den Figuren 1 bis 4 zeichnerisch dargestellt ist, in einer konzentrischen Bauweise ausgeführt. Es werden typischerweise drei identische um jeweils 120° zueinander verdrehte Rastgeometrien 28, 30, 32 eingesetzt. Während der Betätigungsvorgänge, d. h. der Bestromungen der Magnetspule 12, führt die aus sechs Zähnen 108 bestehende Verstellmechanik 20 eine translatorische Bewegung 112 aus, wohingegen sich die Rastmechanik 26 mit einer jeden Bestromung der Magnetspule 12 um 60° um die Symmetrieachse 38 dreht. Die beiden Mechaniken, d. h. die Verstellmechanik 20 und die Rastmechanik 26, befinden sich beweglich in einer Hülse 96, in der drei um je 120° versetzte Rastnasen 24 fest integriert sind, die den Bolzen 42 im ausgefahrenen Zustand 82 in Position halten und die Betätigungskräfte der Parksperre abstützen.

Aufgrund des Einsatzes der Zugfeder 16, die auf den Anker 14 der Magnetspule 12 wirkt, kehrt die Verstellmechanik 20 im stromlosen Zustand der Magnetspule 12 selbsttätig in die in Figur 1 dargestellte Ruheposition 48 zurück, ohne dass es hierfür einer erneuten Bestromung der Magnetspule 12 bedürfte. Dadurch wird nicht nur die Ansteuerung vereinfacht sondern auch weniger Energie benötigt. Des Weiteren wird die Magnetspule 12 thermisch entlastet.

Durch eine in Zusammenhang mit Figur 5 dargestellte Übersetzung der Bewegung des Bolzens 42 in Bezug auf die Sperrklinke 86 können trotz geringer Kräfte des elektromechanischen Aktors 10 sehr hohe Verrastkräfte am Parksperrensystem erzeugt werden. Dies erfolgt insbesondere durch den in den Figuren 5.1 und 5.2 dargestellten Kniehebel 88, der den Weg des Bolzens 42 in eine hohe Kraft an der Sperrklinke 86 umwandelt. Durch die fast parallele Ausrichtung der Hebelelemente des Kniehebels 88 im verriegelten Zustand, vgl. Darstellung gemäß Figur 5.2, entstehen sehr hohe Verriegelungskräfte. Dabei ergibt sich zudem der Umstand, dass sich die Bewegungsgeschwindigkeit der Sperrklinke 86 über den Verstellweg ändert. Im dargestellten Fall sollte sich die Sperrklinke 86 zu Beginn des Verriegelungsvorgangs schnell in Richtung auf das Klinkenrad 84 bewegen, wohingegen gegen Ende eine langsame Bewegung erfolgt, was den Einrastvorgang erleichtert.

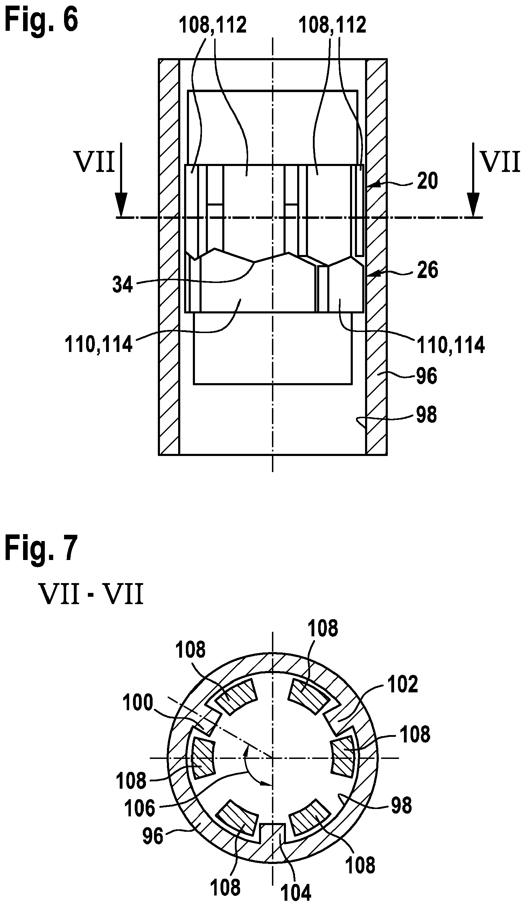

Figur 6 zeigt eine Hülse 96 mit Rastnasen 100, 102, 104 am Innenumfang 98, mit Verstellmechanik 20 und Rastmechanik 26.

Aus der Darstellung gemäß Figur 6 geht ein Längsschnitt durch eine Hülse 96 hervor, innerhalb der konzentrisch zueinander die Verstellmechanik 20 und die Rastmechanik 26 aufgenommen sind. Die Verstellmechanik 20 umfasst beispielsweise sechs Zähne 108, die mit gegenüberliegenden Doppelzähnen 110 der Rastmechanik 26 zusammenwirken. Die Zähne 108 beziehungsweise 110 liegen einander gegenüber. Während die Zähne 108 der Verstellmechanik 20 eine translatorische Bewegung 112 durchführen, vermögen die Doppelzähne 110 der Rastmechanik 26 eine translatorische und rotatorische Bewegung 114 vorzunehmen, d. h. neben einer translatorischen Bewegung 112 auch eine Drehbewegung in Bezug auf die Symmetrieachse 38 der Hülse 96.

Wie aus der in Figur 7 dargestellten Schnittdarstellung hervorgeht, sind am Innenumfang 98 der Hülse 96 beispielsweise drei Rastnasen 100, 102 und 104 aufgenommen, die hier in einer 120°-Teilung 106 am Innenumfang 98 der Hülse 96 angeordnet sind.

Aufgrund der flankenförmig ausgebildeten Rastgeometrien 28, 30, 32 der Doppelzähne 110 der Rastmechanik 26 wird bei einer translatorischen Bewegung 112 der Verstellmechanik 20 die Rastmechanik 26 verdreht, sodass bei ausgefahrenem Bolzen 42, vgl. Position 82 in Figur 5.2, das Klinkenrad 84 blockiert ist.

Bei einer nochmaligen Betätigung des elektromechanischen Aktors 10 nimmt dieser seine Entriegelungsposition 74 ein, d. h. der Bolzen 42 fährt in seine eingefahrene Position 80 zurück.

Die Erfindung wird durch die nachfolgenden Ansprüche definiert und ist nicht auf die hier beschriebenen Ausführungsbeispiele und die darin hervorgehobenen Aspekte beschränkt.

## Patentansprüche

1. Parksperrensystem mit einem elektromechanischen Aktor (10), einem Klinkenrad (84) und einer Sperrklinke (86), sowie einem Kniehebel (88) eines Fahrzeugs, wobei der elektromechanische Aktor (10) eine Magnetspule (12) und einen durch diese betätigten Anker (14) aufweist, wobei die Magnetspule (12) im bestromten Zustand (52) über den Anker (14) eine Verstellmechanik (20) translatorisch bewegt, die eine federvorgespannte Rastmechanik (26) translatorisch und rotatorisch bewegt, wodurch ein Bolzen (42) entweder in seiner eingefahrenen Position (80) oder in seiner ausgefahrenen Position (82) verriegelt ist, wobei der Bolzen (42) mit dem Kniehebel (88) zusammenwirkt, der die dem Klinkenrad (84) zugeordnete Sperrklinke (86) um eine Klinkenachse (90) bewegt,
wobei die Verstellmechanik (20) und die Rastmechanik (26) beweglich in einer Hülse (96) aufgenommen sind und wobei die Verstellmechanik (20) an einer ersten Druckplatte (22) und die Rastmechanik (26) an einer zweiten Druckplatte (40) aufgenommen sind, die jeweils federbeaufschlagt sind, **dadurch gekennzeichnet, dass** die Hülse auf ihrem Innenumfang (98) zueinander versetzte Rastnasen (100, 102, 104) aufweist, wobei die Rastnasen die translatorische Bewegung der Verstellmechanik führen,
und dass eine den Anker (14) mit darin befestigter erster Druckplatte (22) samt Verstellmechanik (20) beaufschlagende Zugfeder (16) die Verstellmechanik (20) im stromlosen Zustand der Magnetspule (12) in ihre Ruheposition (48) - ohne erneute Bestromung der Magnetspule (12) - zurückzieht.

2. Parksperrensystem mit einem elektromechanischen Aktor (19) gemäß Anspruch 1, **dadurch gekennzeichnet, dass** die Rastmechanik (26) und die Verstellmechanik (20) koaxial in Bezug auf ihre Symmetrieachse (38) angeordnet sind.

3. Parksperrensystem mit einem elektromechanischen Aktor (10) gemäß den Ansprüchen 1 bis 2, **dadurch gekennzeichnet, dass** die Rastmechanik (26) eine Anzahl von Rastgeometrien (28, 30, 32) aufweist, die jeweils einen Rastausschnitt (34) umfassen, der von Flanken (94) begrenzt ist.

4. Parksperrensystem mit einem elektromechanischen Aktor (10) gemäß den Ansprüchen 1 bis 3, **dadurch gekennzeichnet, dass** die Verstellmechanik (20) eine Anzahl von Verstellelementen (21) umfasst, die mit Flanken (92) versehen sind, die den Rastgeometrien (28, 30, 32) gegenüberliegen und die komplementär zur Geometrie von deren Flanken (94) ausgeführt sind.

5. Parksperrensystem mit einem elektromechanischen Aktor (10) gemäß den Ansprüchen 1 bis 4, **dadurch gekennzeichnet, dass** bei jeder Bestromung der Magnetspule (12) die bevorzugt sechs Verstellelemente (21) umfassende Verstellmechanik (20) eine translatorische Bewegung (112) ausführt, die die eine Anzahl von Rastgeometrien (28, 30, 32) aufweisende Rastmechanik (26) um 60° um die Symmetrieachse (38) verdreht.

6. Parksperrensystem mit einem elektromechanischen Aktor (10) gemäß den Ansprüchen 1 bis 5, **dadurch gekennzeichnet, dass** die Druckplatten (22, 40), die Verstellmechanik (20) und die Rastmechanik (26) im Gehäuse des elektromechanischen Aktors (10) konzentrisch aufgenommen sind.

7. Verwendung des Parksperrensystems gemäß einem der vorstehenden Ansprüche in einem elektrisch angetriebenen Fahrzeug.

## Claims

1. Parking lock system with an electromechanical actuator (10), a ratchet wheel (84) and a locking pawl (86), and a toggle lever (88) of a vehicle, the electromechanical actuator (10) having a magnet coil (12) and an armature (14) which is actuated by way of the former, the magnet coil (12) moving an adjusting mechanism (20) translationally via the armature (14) in the energized state (52), which adjusting mechanism moves a spring-preloaded latching mechanism (26) translationally and rotationally, as a result of which a pin (42) is latched either in its retracted position (80) or in its extended position (82), the pin (42) interacting with a toggle lever (88) which moves the locking pawl (86), which is assigned to the ratchet wheel (84), about a pawl axis (90), the adjusting mechanism (20) and the latching mechanism (26) being received movably in a sleeve (96), and the adjusting mechanism (20) being received on a first pressure plate (22) and the latching mechanism (26) being received on a second pressure plate (40), which pressure plates (22, 40) are each spring-loaded, **characterized in that**, on its inner circumference (98), the sleeve has latching lugs (100, 102, 104) which are offset with respect to one another, the latching lugs guiding the translational movement of the adjusting mechanism, and **in that** a tension spring (16) which loads the armature (14) with the first pressure plate (22) fastened therein including the adjusting mechanism (20) withdraws the adjusting mechanism (20) into its rest position (48) in the currentless state of the magnet coil (12), without renewed energization of the magnet coil (12).

2. Parking lock system with an electromechanical actuator (19) according to Claim 1, **characterized in that** the latching mechanism (26) and the adjusting mechanism (20) are arranged coaxially in relation to their axis of symmetry (38).

3. Parking lock system with an electromechanical actuator (10) according to Claims 1 and 2, **characterized in that** the latching mechanism (26) has a number of latching geometries (28, 30, 32) which each comprise a latching cut-out (34) which is delimited by flanks (94).

4. Parking lock system with an electromechanical actuator (10) according to Claims 1 to 3, **characterized in that** the adjusting mechanism (20) comprises a number of adjusting elements (21) which are provided with flanks (92) which lie opposite the latching geometries (28, 30, 32) and which are of complementary configuration with respect to the geometry of their flanks (94).

5. Parking lock system with an electromechanical actuator (10) according to Claims 1 to 4, **characterized in that**, in the case of each energization of the magnet coil (12), the adjusting mechanism (20) which preferably comprises six adjusting elements (21) carries out a translational movement (112) which rotates the latching mechanism (26) which has a number of latching geometries (28, 30, 32) by 60° about the axis of symmetry (38).

6. Parking lock system with an electromechanical actuator (10) according to Claims 1 to 5, **characterized in that** the pressure plates (22, 40), the adjusting mechanism (20) and the latching mechanism (26) are received concentrically in the housing of the electromechanical actuator (10).

7. Use of the parking lock system according to one of the preceding claims in an electrically driven vehicle.

## Revendications

1. Système de blocage de stationnement avec un actionneur électromécanique (10), une roue à rochet (84) et un cliquet d'arrêt (86), ainsi qu'un levier à genouillère (88) d'un véhicule, l'actionneur électromécanique (10) présentant une bobine magnétique (12) et un induit (14) actionné par celle-ci, la bobine magnétique (12) déplaçant en translation, à l'état alimenté (52), par l'intermédiaire de l'induit (14), un mécanisme de réglage (20), qui déplace en translation et en rotation un mécanisme d'encliquetage (26) précontraint par ressort, moyennant quoi un boulon (42) est verrouillé soit dans sa position rentrée (80) soit dans sa position sortie (82), le boulon (42) coopérant avec le levier à genouillère (88) qui déplace le cliquet d'arrêt (86) associé à la roue à rochet (84) autour d'un axe de cliquet (90),
le mécanisme de réglage (20) et le mécanisme d'encliquetage (26) étant logés de manière mobile dans une douille (96) et le mécanisme de réglage (20) étant logé sur une première plaque de pression (22) et le mécanisme d'encliquetage (26) sur une deuxième plaque de pression (40), qui sont chacune sollicitées par ressort, **caractérisé en ce que** la douille présente sur sa périphérie intérieure (98) des ergots d'encliquetage (100, 102, 104) décalés les uns par rapport aux autres, les ergots d'encliquetage guidant le mouvement de translation du mécanisme de réglage,
et **en ce qu'**un ressort de traction (16) sollicitant l'induit (14) avec la première plaque de pression (22) qui y est fixée, y compris le mécanisme de réglage (20), rétracte le mécanisme de réglage (20) dans sa position de repos (48) à l'état non alimenté de la bobine magnétique (12), sans nouvelle alimentation de la bobine magnétique (12).

2. Système de blocage de stationnement avec un actionneur électromécanique (19) selon la revendication 1, **caractérisé en ce que** le mécanisme d'encliquetage (26) et le mécanisme de réglage (20) sont agencés coaxialement par rapport à leur axe de symétrie (38).

3. Système de blocage de stationnement avec un actionneur électromécanique (10) selon les revendications 1 à 2, **caractérisé en ce que** le mécanisme d'encliquetage (26) présente un nombre de géométries d'encliquetage (28, 30, 32) qui comprennent chacune une découpe d'encliquetage (34) qui est délimitée par des flancs (94).

4. Système de blocage de stationnement avec un actionneur électromécanique (10) selon les revendications 1 à 3, **caractérisé en ce que** le mécanisme de réglage (20) comprend un nombre d'éléments de réglage (21) qui sont pourvus de flancs (92) qui sont en face des géométries d'encliquetage (28, 30, 32) et qui sont réalisés sous forme complémentaire à la géométrie de leurs flancs (94).

5. Système de blocage de stationnement avec un actionneur électromécanique (10) selon les revendications 1 à 4, **caractérisé en ce que**, à chaque alimentation de la bobine magnétique (12), le mécanisme de réglage (20) comprenant de préférence six éléments de réglage (21) effectue un mouvement de translation (112) qui fait tourner de 60° autour de l'axe de symétrie (38) le mécanisme d'encliquetage (26) présentant un nombre de géométries d'encliquetage (28, 30, 32).

6. Système de blocage de stationnement avec un actionneur électromécanique (10) selon les revendications 1 à 5, **caractérisé en ce que** les plaques de pression (22, 40), le mécanisme de réglage (20) et le mécanisme d'encliquetage (26) sont logés de manière concentrique dans le boîtier de l'actionneur électromécanique (10).

7. Utilisation du système de blocage de stationnement selon l'une quelconque des revendications précédentes dans un véhicule à propulsion électrique.
